(19) **Europäisches Patentamt / European Patent Office / Office européen des brevets**

(11) **EP 4 606 856 A1**

(12) **EUROPEAN PATENT APPLICATION**
published in accordance with Art. 153(4) EPC

(43) Date of publication:
**27.08.2025 Bulletin 2025/35**

(21) Application number: **23880194.8**

(22) Date of filing: **17.10.2023**

(51) International Patent Classification (IPC):
**C08L 51/04** (2006.01)   **C08L 35/06** (2006.01)
**C08L 35/04** (2006.01)   **C08L 25/08** (2006.01)

(52) Cooperative Patent Classification (CPC):
**C08L 25/08; C08L 33/12; C08L 33/20; C08L 35/04;
C08L 35/06; C08L 51/04**

(86) International application number:
**PCT/KR2023/016081**

(87) International publication number:
**WO 2024/085617 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.10.2022 KR 20220136322**

(71) Applicant: **LG Chem, Ltd.**
**Yeongdeungpo-gu**
**Seoul 07336 (KR)**

(72) Inventors:
• **LEE, Won Seok**
  **Daejeon 34122 (KR)**
• **CHOI, Jeong Su**
  **Daejeon 34122 (KR)**
• **LEE, Roo Da**
  **Daejeon 34122 (KR)**
• **PARK, Sang Hoo**
  **Daejeon 34122 (KR)**
• **LEE, Jong Ju**
  **Daejeon 34122 (KR)**
• **HWANG, Hee Dong**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **RESIN COMPOSITION**

(57)    The present invention relates to a resin composition having excellent heat resistance, transparency and processability.

EP 4 606 856 A1

**Description**

**TECHNICAL FIELD**

[Cross-reference to Related Applications]

The present application claims the benefit of priority based on Korean Patent Application No. 10-2022-0136322, filed on October 21, 2022, the entire contents of which are incorporated herein by reference.

[Technical Field]

The present invention relates to a resin composition.

**BACKGROUND ART**

Acrylonitrile-butadiene-styrene (ABS) copolymers are prepared by the graft copolymerization of styrene and acrylonitrile to butadiene rubbery polymers. The ABS copolymers are provided with all of rigidity, chemical resistance and processability, and excellent impact strength and secondary processing properties such as mechanical properties, surface gloss, plating, printing, painting and the like, and have advantages of producing products having various colors. However, the use of the ABS itself is limited in the parts of the interior or exterior materials for cars, requiring heat resistance, or parts requiring transparency such as the transparent window of a washing machine, the dust cup of a cleaner, and the transparent window of office machines.

In order to overcome the defects, a method for providing a plastic material with transparency is known. First, a method of using a polycarbonate resin as a transparent plastic material is known. The polycarbonate resin has excellent transparency and impact resistance at room temperature, but has defects of inferior chemical resistance and impact resistance at a low temperature and insufficient processability, and has limitations in the application to large-sized parts. In addition, US Patent No. 3,787,522 and Japanese Registration Patent No. 1988-042940 disclose methods of providing a transparent polymethyl methacrylate resin with impact resistance. The polymethyl methacrylate resin has excellent transparency and processability but significantly inferior impact resistance and has limitation in the application to parts requiring impact resistance. In addition, European Registration Patent No. 0,703,252 discloses a method of providing a high-impact polystyrene (HIPS) resin with transparency, but the high-impact polystyrene resin has defects of inferior chemical resistance and scratch resistance.

Meanwhile, as a method for preparing an ABS copolymer having excellent heat resistance, a method of introducing a monomer having excellent heat resistance or a method of adding an inorganic material or the like to a portion of a resin composition including an ABS copolymer has been developed. As a general method of introducing a monomer having excellent heat resistance, a method of adding a maleimide-based monomer or an alpha-methylstyrene-based monomer in a polymerization process, or a method of blending a heat resistant styrene-based resin including the monomer with an ABS copolymer is known. However, the maleimide-based monomer has properties of a very fast polymerization rate, and defects of the difficult control of the reaction temperature may occur, and has the high heat of reaction, and there are limitations in increasing the content of the maleimide-based monomer in the resin. With the increase of the content of the maleimide-based monomer in the resin, there are defects of deteriorating the compatibility with the ABS copolymer and impact strength. In addition, the alpha-methylstyrene monomer has a very slow polymerization rate and requires long reaction time, and there are defects of preparing a polymer having a low molecular weight and arising easy thermal decomposition.

[Prior Art Documents]

[Patent Documents]

    (Patent Document 1) US 3787522 A
    (Patent Document 2) JP 1988-042940 B2
    (Patent Document 3) EP 0703252 B2

**DISCLOSURE OF THE INVENTION**

## TECHNICAL PROBLEM

The present invention has been devised to solve the above-described defects of the prior arts and to provide a resin composition having excellent heat resistance, transparency and processability.

## TECHNICAL SOLUTION

In order to solve the above tasks, the present invention provides a resin composition.

(1) The present invention provides a resin composition comprising a graft copolymer and a styrene-based copolymer, wherein the graft copolymer comprises a conjugated diene-based polymer, an alkyl (meth)acrylate-based monomer unit and an aromatic vinyl-based monomer unit, and the styrene-based copolymer comprises an alkyl (meth)acrylate-based monomer unit, an aromatic vinyl-based monomer unit and a maleimide-based monomer unit.

(2) The present invention provides the resin composition of (1), wherein the graft copolymer has a refractive index of 1.515 to 1.520.

(3) The present invention provides the resin composition of (1) or (2), wherein the graft copolymer has a weight average molecular weight of 90,000 g/mol to 130,000 g/mol.

(4) The present invention provides the resin composition of one among (1) to (3), wherein the graft copolymer has molecular weight distribution of 2.7 or less.

(5) The present invention provides the resin composition of one among (1) to (4), wherein the graft copolymer has a grafting ratio of 44% or more.

(6) The present invention provides the resin composition of one among (1) to (5), wherein the graft copolymer comprises 20 wt% to 70 wt% of the conjugated diene-based polymer, 25 wt% to 55 wt% of the alkyl (meth)acrylate-based monomer unit, 1 wt% to 15 wt% of the aromatic vinyl-based monomer unit, and 0 wt% to 5 wt% of a vinylcyan-based monomer unit.

(7) The present invention provides the resin composition of one among (1) to (6), wherein the graft copolymer comprises a maleimide-based monomer unit.

(8) The present invention provides the resin composition of (7), wherein the graft copolymer comprises 20 wt% to 70 wt% of the conjugated diene-based polymer, 25 wt% to 55 wt% of the alkyl (meth)acrylate-based monomer unit, 0.1 wt% to 3 wt% of the maleimide-based monomer unit, 1 wt% to 15 wt% of the aromatic vinyl-based monomer unit, and 0 wt% to 5 wt% of a vinylcyan-based monomer unit.

(9) The present invention provides the resin composition of one among (1) to (8), wherein the styrene-based copolymer comprises 50 wt% to 90 wt% of the alkyl (meth)acrylate-based monomer unit, 1 wt% to 20 wt% of the aromatic vinyl-based monomer unit, 1 wt% to 20 wt% of the maleimide-based monomer unit, and 0 wt% to 5 wt% of a vinylcyan-based monomer unit.

(10) The present invention provides the resin composition of one among (1) to (9), wherein the resin composition comprises on the basis of the total amount of the graft copolymer and the styrene-based copolymer, 10 wt% to 40 wt% of the conjugated diene-based polymer, 40 wt% to 75 wt% of the alkyl (meth)acrylate-based monomer unit, 5 wt% to 15 wt% of the maleimide-based monomer unit, 5 wt% to 15 wt% of the aromatic vinyl-based monomer unit, and 0 wt% to 5 wt% of a vinylcyan-based monomer unit.

(11) The present invention provides the resin composition of one among (1) to (10), wherein the resin composition has a heat deflection temperature of 90.0°C or higher, measured under a stress of 18.6 kgf using a specimen having a thickness of 6.4 mm by a method of ASTM D648.

(12) The present invention provides the resin composition of one among (1) to (11), wherein the resin composition has a haze change amount of 2.0 or less, obtained by a method of ASTM D1003 by measuring haze with respect to a specimen having a thickness of 3 mm, storing the specimen in a low temperature chamber of -40°C for 12 hours, measuring haze again, and calculating according to Mathematical Formula 4.

$$\Delta Haze = (\text{haze of specimen after storing at low temperature}) - (\text{haze of specimen before storing at low temperature}) \qquad \text{[Mathematical Formula 4]}$$

## ADVANTAGEOUS EFFECTS

The resin composition of the present invention has excellent heat resistance, transparency and processability.

## MODE FOR CARRYING OUT THE INVENTION

Hereinafter, the present invention will be described in more detail to assist the understanding of the present invention.

It will be understood that words or terms used in the description and claims of the present invention shall not be interpreted as the meaning defined in commonly used dictionaries. It will be understood that the words or terms should be interpreted as having a meaning that is consistent with their meaning in the technical idea of the invention, based on the principle that an inventor may properly define the meaning of the words to best explain the invention.

The term "monomer unit" used in the present invention may represent a component or a structure derived from the monomer or the material itself, and in a particular embodiment, may mean a repeating unit formed in a polymer during the polymerization of a polymer through the participation of a monomer injected in the polymerization reaction.

The term "composition" used in the present invention includes a mixture of materials including the corresponding composition as well as a reaction product and a decomposition product formed from the materials of the corresponding composition.

The present invention provides a resin composition. The resin composition may be a transparent resin composition having excellent heat resistance, transparency and processability.

According to an embodiment of the present invention, the resin composition may include a graft copolymer and a styrene-based copolymer, wherein the graft copolymer may include a conjugated diene-based polymer, an alkyl (meth) acrylate-based monomer unit and an aromatic vinyl-based monomer unit, and the styrene-based copolymer may include an alkyl (meth)acrylate-based monomer unit, an aromatic vinyl-based monomer unit and a maleimide-based monomer unit.

According to an embodiment of the present invention, the resin composition may be a resin composition including a graft copolymer dispersed in a styrene-based copolymer which is a matrix resin. In this way, by including the graft copolymer and the styrene-based copolymer at the same time, the heat resistance and the processability of the transparent composition may be improved, while securing impact strength due to the graft copolymer.

According to an embodiment of the present invention, the graft copolymer may include a conjugated diene-based polymer, an alkyl (meth)acrylate-based monomer unit and an aromatic vinyl-based monomer unit.

According to an embodiment of the present invention, the conjugated diene-based polymer is a polymer including a conjugated diene-based monomer and a polymerized conjugated diene-based monomer unit, and may be referred to as a rubber.

According to an embodiment of the present invention, the conjugated diene-based monomer may include one or more selected from the group consisting of 1,3-butadiene, 2,3-dimethyl-1,3-butadiene, piperylene, 3-butyl-1,3-octadiene, isoprene and 2-phenyl-1,3-butadiene, more particularly, 1,3-butadiene.

According to an embodiment of the present invention, the conjugated diene-based polymer includes the conjugated diene-based monomer and may be a conjugated diene-based copolymer by further including a monomer copolymerizable with the conjugated diene-based monomer. In a particular embodiment, the conjugated diene-based polymer may be a butadiene polymer, a butadiene-styrene copolymer or a butadiene-acrylonitrile copolymer.

According to an embodiment of the present invention, the conjugated diene-based polymer may have a conjugated diene-based polymer latex type including a conjugated diene-based polymer prepared by emulsion polymerization, and may be injected when preparing a graft copolymer.

According to an embodiment of the present invention, the conjugated diene-based polymer may have an average particle diameter, measured using a dynamic light scattering method, of 80 nm to 400 nm. In a particular embodiment, the average particle diameter of the conjugated diene-based polymer may be 80 nm or more, 100 nm or more, 150 nm or more, 200 nm or more, or 250 nm or more, and 400 nm or less, 350 nm or less, or 300 nm or less.

According to an embodiment of the present invention, the conjugated diene-based polymer latex may have the gel content of 60 wt% to 95 wt%. In a particular embodiment, the gel content of the conjugated diene-based polymer latex may be 60 wt% or more, 65 wt% or more, or 70 wt% or more, and 95 wt% or less, 90 wt% or less, 85 wt% or less, 80 wt% or less, or 75 wt% or less.

According to an embodiment of the present invention, the conjugated diene-based polymer latex may have a swelling index of 12 to 40.

According to an embodiment of the present invention, the graft copolymer may include an alkyl (meth)acrylate-based monomer unit, a maleimide-based monomer unit and an aromatic vinyl-based monomer unit, which are graft polymerized to the conjugated diene-based polymer. Accordingly, the graft copolymer may be a core-shell type graft copolymer including a core including the conjugated diene-based polymer and a shell including the alkyl (meth)acrylate-based monomer unit, the maleimide-based monomer unit and the aromatic vinyl-based monomer unit, which are graft polymerized to the conjugated diene-based polymer.

According to an embodiment of the present invention, the alkyl (meth)acrylate-based monomer unit is for providing the graft copolymer with transparency and for improving compatibility with the styrene-based copolymer, and the alkyl (meth)acrylate-based monomer for forming the alkyl (meth)acrylate-based monomer unit may be an alkyl (meth) acrylate-based monomer of 1 to 12 carbon atoms. Particular examples of the alkyl (meth)acrylate-based monomer may be one or more selected from the group consisting of methyl (meth)acrylate, ethyl (meth)acrylate, propyl (meth)acrylate, 2-ethylhexyl (meth)acrylate, decyl (meth)acrylate and lauryl (meth)acrylate, more particularly, methyl (meth)acrylate. Here, the (meth)acrylate includes both methacrylate and acrylate.

According to an embodiment of the present invention, the aromatic vinyl-based monomer unit is for improving mechanical properties and the compatibility with the styrene-based copolymer, and may be one or more selected from the group consisting of styrene, alpha-methylstyrene, alpha-ethylstyrene and para-methylstyrene, particularly, styrene.

According to an embodiment of the present invention, the graft copolymer may further include a vinylcyan-based monomer unit graft polymerized to the conjugated diene-based polymer. The vinylcyan-based monomer unit is for improving mechanical properties and the compatibility with the styrene-based copolymer, and may be one or more selected from the group consisting of acrylonitrile, methacrylonitrile and ethacrylonitrile, particularly, acrylonitrile.

According to an embodiment of the present invention, the graft copolymer may have a refractive index of 1.515 to 1.520. In a particular embodiment, the graft copolymer may have a refractive index of 1.515 or more, 1.516 or more, 1.517 or more, or 1.518 or more, and 1.520 or less, 1.519 or less, or 1.518 or less. Within this range, the transparency of the resin composition may be significantly excellent. The refractive index may be calculated according to Mathematical Formula 1 from the amounts of the components injected when preparing the graft copolymer. In addition, the refractive index may be a refractive index measured using an Abbe refractometer. The refractive index may be controlled according to the components and amounts of the polymers and monomers, injected when polymerizing the graft copolymer. Particularly, in order to secure the transparency of the graft copolymer, the refractive index of the conjugated diene-based polymer and the refractive index of the whole remaining components are required to control to similar degrees, and accordingly, the mixing ratio of the monomers may be important. In an embodiment, the refractive indexes of the polymer and monomer components injected when preparing the graft copolymer may be about 1.518 for 1,3-butadiene, about 1.49 for methyl methacrylate, about 1.63 for N-phenylmaleimide, about 1.55 for styrene and about 1.52 for acrylonitrile.

$$[\text{Mathematical Formula 1}]$$

$$\text{Refractive index (RI)} = \sum Wti*RIi$$

-    Wti = weight fraction of each component in graft copolymer (%)
-    RIi = refractive index of homopolymer of each component of graft copolymer

According to an embodiment of the present invention, the graft copolymer may have a weight average molecular weight of 90,000 g/mol to 130,000 g/mol. The weight average molecular weight of the graft copolymer may be a weight average molecular weight of a shell in a core-shell type graft copolymer, in a particular embodiment, a weight average molecular weight of a free polymer including each monomer unit included in the shell in a non-grafted state to the conjugated diene-based polymer which is a core. The weight average molecular weight may be obtained by separating the graft copolymer into sol and gel, diluting the sol thus obtained in tetrahydrofuran, and performing measurement by gel permeation chromatography. In a particular embodiment, the weight average molecular weight of the graft copolymer may be 90,000 g/mol or more, 91,000 g/mol or more, 92,000 g/mol or more, 93,000 g/mol or more, 94,000 g/mol or more, 95,000 g/mol or more, 96,000 g/mol or more, 97,000 g/mol or more, 98,000 g/mol or more, 99,000 g/mol or more, 100,000 g/mol or more, 100,500 g/mol or more, 101,000 g/mol or more, 101,500 g/mol or more, or 102,000 g/mol or more, and 130,000 g/mol or less, 125,000 g/mol or less, 120,000 g/mol or less, or 115,000 g/mol or less, and within this range, the mechanical properties of the resin composition may be good, and the compatibility with the styrene-based copolymer may be excellent even further.

According to an embodiment of the present invention, the molecular weight distribution of the graft copolymer may be 2.7 or less. Here, the molecular weight distribution is the ratio of the weight average molecular weight to a number average molecular weight, and may mean "weight average molecular weight (Mw) /number average molecular weight (Mn)". The molecular weight distribution of the graft copolymer may be 2.7 or less, 2.6 or less, 2.5 or less, 2.4 or less, or 2.3 or less, and 1.0 or more, 1.5 or more, 2.0 or more or 2.1 or more, and within this range, the mechanical properties of the resin composition may be good, and the compatibility with the styrene-based copolymer may be excellent even further.

According to an embodiment of the present invention, the weight average molecular weight and the molecular weight distribution of the graft copolymer may be controlled by a molecular weight modifier during polymerizing the graft copolymer. The molecular weight modifier may be a mercaptan-type molecular weight modifier, particularly, one or more selected from the group consisting of 1-butyl mercaptan, n-decyl mercaptan, n-hexyl mercaptan and n-octyl mercaptan, more particularly, n-octyl mercaptan.

According to an embodiment of the present invention, the grafting ratio of the graft copolymer may be 44% or more. The grafting ratio of the graft copolymer may be obtained by injecting a certain amount of a dried copolymer fragment of a graft copolymer latex into acetone, vibrating for 24 hours using a vibrator (product name: SI-600R, manufacturer: Lab. companion) to dissolve a free graft copolymer, centrifuging for 1 hour at 14,000 rpm using a centrifuge, drying for 2 hours at 140°C using a vacuum drier (product name: DRV320DB, manufacturer: ADVANTEC) to obtain an insoluble component, and calculating according to Mathematical Formula 2. In a particular embodiment, the grafting ratio of the graft copolymer may be 44% or more, 45% or more, 46% or more, 47% or more, 48% or more, 49% or more, or 50% or more, and 80% or less, 75% or less, or 70% or less, and within this range, the mechanical properties of the resin composition may be good, and the compatibility with the styrene-based copolymer may be excellent even further.

[Mathematical Formula 2]

Grafting ratio(%) = [(Y-(X*R))/(X*R)]*100

Y: weight of insoluble component
X: weight of graft copolymer injected when obtaining insoluble component
R: fraction of conjugated diene-based polymer in graft copolymer injected when obtaining insoluble component

According to an embodiment of the present invention, in the graft copolymer, the amounts of the conjugated diene-based polymer and each monomer unit may be controlled in view of improving mechanical properties by the graft copolymer, and improving all of heat resistance, transparency and processability. In a particular embodiment, the graft copolymer may include 20 wt% to 70 wt% of the conjugated diene-based polymer, 25 wt% to 55 wt% of the alkyl (meth) acrylate-based monomer unit, 0.1 wt% to 3 wt% of the maleimide-based monomer unit, 1 wt% to 15 wt% of the aromatic vinyl-based monomer unit, and 0 wt% to 5 wt% of the vinylcyan-based monomer unit.

According to an embodiment of the present invention, the graft copolymer may include the conjugated diene-based polymer in 20 wt% to 70 wt%. In a particular embodiment, the graft copolymer may include the conjugated diene-based polymer in 20 wt% or more, 25 wt% or more, 30 wt% or more, 35 wt% or more, 40 wt% or more, 45 wt% or more, or 50 wt% or more, and 70 wt% or less, 65 wt% or less, 60 wt% or less, 55 wt% or less, or 50 wt% or less, and within this range, graft polymerization may be carried out smoothly, while securing the impact strength of the resin composition, and mechanical properties may be excellent even further.

According to an embodiment of the present invention, the graft copolymer may include the alkyl (meth)acrylate-based monomer unit in 25 wt% to 55 wt%. In a particular embodiment, the graft copolymer may include the alkyl (meth) acrylate-based monomer unit in 25 wt% or more, 30 wt% or more, or 35 wt% or more, and 55 wt% or less, 50 wt% or less, 45 wt% or less, 40 wt% or less, or 35 wt% or less, and within this range, the transparency of the resin composition may be good, the compatibility of the graft copolymer and the styrene-based copolymer may be good, and mechanical properties may be excellent.

According to an embodiment of the present invention, the graft copolymer may include the aromatic vinyl-based monomer unit in 1 wt% to 15 wt%. In a particular embodiment, the graft copolymer may include the aromatic vinyl-based monomer unit in 1 wt% or more, 5 wt% or more, 6 wt% or more, 7 wt% or more, 8 wt% or more, 9 wt% or more, or 10 wt% or more, and 15 wt% or less, 14 wt% or less, 13 wt% or less, or 12 wt% or less, and within this range, the transparency of the resin composition may be good, the compatibility of the graft copolymer and the styrene-based copolymer may be good, and mechanical properties may be excellent.

According to an embodiment of the present invention, the graft copolymer may include the vinylcyan-based monomer unit in 0 wt% to 5 wt%. In a particular embodiment, the graft copolymer may include the vinylcyan-based monomer unit in 0.0 wt% or more, 0.1 wt% or more, 0.5 wt% or more, 1 wt% or more, 1.5 wt% or more, or 2.0 wt% or more, and 5.0 wt% or less, 4.5 wt% or less, 4.0 wt% or less, 3.5 wt% or less, 3.0 wt% or less, or 2.5 wt% or less, and within this range, the transparency and color of the resin composition may be good, the coagulum content according to the deterioration of latex stability may be minimized, the compatibility of the graft copolymer and the styrene-based copolymer may be good, and mechanical properties may be excellent.

According to an embodiment of the present invention, the graft copolymer may include the maleimide-based monomer unit. The maleimide-based monomer unit is for providing the graft copolymer with heat resistance and for improving the compatibility with the styrene-based copolymer. A maleimide monomer for forming the maleimide-based monomer unit may be one or more selected from the group consisting of N-phenylmaleimide, maleimide, N-methylmaleimide, N-ethylmaleimide, N-propylmaleimide, N-isopropylmaleimide, N-butylmaleimide, N-isobutylmaleimide, N-t-butylmaleimide, N-cyclohexylmaleimide, N-chloromaleimide, N-methylphenylmaleimide, N-bromophenylmaleimide, N-naphthylmaleimide, N-laurylmaleimide, N-hydroxyphenylmaleimide, N-methoxyphenylmaleimide, N-carboxyphenylmaleimide, N-nitrophenylmaleimide and N-benzylmaleimide, particularly, N-phenylmaleimide.

According to an embodiment of the present invention, if the graft copolymer includes the maleimide-based monomer unit, the graft copolymer may include the maleimide-based monomer unit in 0.1 wt% to 3 wt%. The maleimide-based monomer has properties of a very rapid polymerization rate and has defects of very difficult control of the reaction temperature, and also has a high heat of reaction, and the control of a suitable amount is preferably required to minimize the coagulum content according to the deterioration of latex stability and to prevent the discoloration of the resin composition. In a particular embodiment, the graft copolymer may include the maleimide-based monomer unit in 0.1 wt% or more, 0.5 wt% or more, or 1.0 wt% or more, and 3.0 wt% or less, 2.5 wt% or less, or 2.0 wt% or less, and within this range, the heat resistance and transparency of the resin composition may be good, the compatibility of the graft copolymer and the styrene-based copolymer may be good, and mechanical properties may be excellent.

According to an embodiment of the present invention, the styrene-based copolymer may be the matrix resin of the resin composition, and the styrene-based copolymer is referred to in the present invention according to the name referring a common matrix resin, but in view of the ratio among monomers described hereinafter, an acrylic copolymer may be referred to as the matrix resin. The styrene-based copolymer may be a non-grafted copolymer including the alkyl (meth) acrylate-based monomer unit, the aromatic vinyl-based monomer unit and the maleimide-based monomer unit, and may particularly further include the vinylcyan-based monomer unit as necessary.

According to an embodiment of the present invention, the alkyl (meth)acrylate-based monomer unit, the aromatic vinyl-based monomer unit, the maleimide-based monomer unit and the vinylcyan-based monomer unit of the styrene-based copolymer may be selected from the above-described alkyl (meth)acrylate-based monomer, the aromatic vinyl-based monomer, the maleimide-based monomer and the vinylcyan-based monomer of the graft copolymer, respectively, and may be the same as or different from each monomer of the graft copolymer.

According to an embodiment of the present invention, the styrene-based copolymer may have a refractive index of 1.515 to 1.520. In a particular embodiment, the styrene-based copolymer may have a refractive index of 1.515 or more, 1.516 or more, 1.517 or more, or 1.518 or more, and 1.520 or less, 1.519 or less, or 1.518 or less, and within this range, the transparency of the resin composition may particularly be good. The refractive index may be calculated according to Mathematical Formula 5 from the amounts of the components injected when preparing the styrene-based copolymer. In addition, the refractive index may be a refractive index measured using an Abbe refractometer. The refractive index may be controlled according to the components and amounts of polymers and monomers injected when polymerizing the styrene-based copolymer. In an embodiment, the refractive indexes according to the monomer components injected when preparing the styrene-based copolymer may be about 1.49 for methyl methacrylate, about 1.63 for N-phenylmaleimide, about 1.55 for styrene, and about 1.52 for acrylonitrile.

[Mathematical Formula 5]

$$\text{Refractive index (RI)} = \sum Wt_i * RI_i$$

- Wt$_i$ = weight fraction of each component in styrene-based copolymer (%)
- RI$_i$ = refractive index of homopolymer of each component of styrene-based copolymer

According to an embodiment of the present invention, the styrene-based copolymer may have a weight average molecular weight of 80,000 g/mol to 160,000 g/mol. The weight average molecular weight of the styrene-based copolymer may be obtained by diluting in tetrahydrofuran and measuring by gel permeation chromatography. In a particular embodiment, the weight average molecular weight of the styrene-based copolymer may be 80,000 g/mol or more, 85,000 g/mol or more, 90,000 g/mol or more, 95,000 g/mol or more, or 100,000 g/mol or more, and 160,000 g/mol or less, 155,000 g/mol or less, 150,000 g/mol or less, or 140,000 g/mol or less, and within this range, the mechanical properties of the resin composition may be good, and the compatibility with the graft copolymer may be excellent even further.

According to an embodiment of the present invention, in the styrene-based copolymer, the amount of each monomer unit may be controlled in view of improving the mechanical properties of the resin composition and improving all of heat resistance, transparency and processability. In a particular embodiment, the styrene-based copolymer may include 50 wt% to 90 wt% of the alkyl (meth)acrylate-based monomer unit, 1 wt% to 20 wt% of the aromatic vinyl-based monomer unit, 1 wt% to 20 wt% of the maleimide-based monomer unit, and 0 wt% to 5 wt% of the vinylcyan-based monomer unit.

According to an embodiment of the present invention, the styrene-based copolymer may include the alkyl (meth) acrylate-based monomer unit in 50 wt% to 90 wt%. In a particular embodiment, the styrene-based copolymer may include the alkyl (meth)acrylate-based monomer unit in 50 wt% or more, 55 wt% or more, 60 wt% or more, 65 wt% or more, 70 wt% or more or 75 wt% or more, and 90 wt% or less, 85 wt% or less, or 80 wt% or less, and within this range, the transparency of the resin composition may be good, the compatibility of the graft copolymer and the styrene-based copolymer may be good, and mechanical properties may be excellent.

According to an embodiment of the present invention, the styrene-based copolymer may include the aromatic vinyl-based monomer unit in 1 wt% to 20 wt%. In a particular embodiment, the styrene-based copolymer may include the aromatic vinyl-based monomer unit in 1 wt% or more, 2 wt% or more, 3 wt% or more, 4 wt% or more, 5 wt% or more, or 9 wt% or more, and 20 wt% or less, 19 wt% or less, 18 wt% or less, 17 wt% or less, 16 wt% or less, or 15 wt% or less, and within this range, the transparency of the resin composition may be good, the compatibility of the graft copolymer and the styrene-based copolymer may be good, and mechanical properties may be excellent.

According to an embodiment of the present invention, the styrene-based copolymer may include the maleimide-based monomer unit in 1 wt% to 20 wt%. In a particular embodiment, the styrene-based copolymer may include the maleimide-based monomer unit in 1 wt% or more, 2 wt% or more, 3 wt% or more, 4 wt% or more, 5 wt% or more, 6 wt% or more, 7 wt% or more, or 7.5 wt% or more, and 20 wt% or less, 19 wt% or less, 18 wt% or less, 17 wt% or less, or 15 wt% or less, and within this range, the heat resistance and the transparency of the resin composition may be good, the compatibility of the graft copolymer and the styrene-based copolymer may be good, and mechanical properties may be excellent.

According to an embodiment of the present invention, the styrene-based copolymer may include the vinylcyan-based monomer unit in 0 wt% to 5 wt%. In a particular embodiment, the styrene-based copolymer may include the vinylcyan-based monomer unit in 0.0 wt% or more, 0.1 wt% or more, 0.5 wt% or more, 1 wt% or more, 1.5 wt% or more, or 2.0 wt% or more, and 5.0 wt% or less, 4.5 wt% or less, 4.0 wt% or less, 3.5 wt% or less, or 3.0 wt% or less, and within this range, the transparency and color of the resin composition may be good, the coagulum content according to the deterioration of latex stability may be minimized, the compatibility of the graft copolymer and the styrene-based copolymer may be good, and mechanical properties may be excellent.

According to an embodiment of the present invention, the resin composition may include 10 wt% to 40 wt% of the graft copolymer and 60 wt% to 90 wt% of the styrene-based copolymer. In a particular embodiment, the resin composition may include the graft copolymer in 10 wt% or more, 15 wt% or more, 20 wt% or more, 25 wt% or more, or 30 wt% or more, and 40 wt% or less, 35 wt% or less, or 30 wt% or less, and may include the styrene-based compound in a balance amount as a component other than the graft copolymer.

According to an embodiment of the present invention, the resin composition may include 10 wt% to 40 wt% of the conjugated diene-based polymer, 40 wt% to 75 wt% of the alkyl (meth)acrylate-based monomer unit, 5 wt% to 15 wt% of the maleimide-based monomer unit, 5 wt% to 15 wt% of the aromatic vinyl-based monomer unit, and 0 wt% to 5 wt% of the vinylcyan-based monomer unit on the basis of the total amount of the graft copolymer and the styrene-based copolymer. If the graft copolymer and the styrene-based copolymer are mixed and kneaded in the resin composition, though the graft copolymer and the styrene-based copolymer include monomer units formed from the same type of monomer, the individual distinguishment thereof is not easy. The contents of the conjugated diene-based polymer and each monomer unit mean not the contents of the polymers and monomer units in the graft copolymer and the styrene-based copolymer, but the contents of the polymers and monomer units in the resin composition including the graft copolymer and the styrene-based copolymer.

According to an embodiment of the present invention, the resin composition may include the conjugated diene-based polymer in 10 wt% to 40 wt%. In a particular embodiment, the resin composition may include the conjugated diene-based polymer in 10 wt% or more, 11 wt% or more, 12 wt% or more, 13 wt% or more, 14 wt% or more, or 15 wt% or more, and 40 wt% or less, 35 wt% or less, 30 wt% or less, 25 wt% or less, or 20 wt% or less, and within this range, the transparency and processability may be good even further, while securing the impact strength and mechanical properties of the resin composition.

According to an embodiment of the present invention, the resin composition may include the alkyl (meth)acrylate-based monomer unit in 40 wt% to 75 wt%. In a particular embodiment, the graft copolymer may include the alkyl (meth) acrylate-based monomer unit in 40 wt% or more, 45 wt% or more, 50 wt% or more, 55 wt% or more, or 60 wt% or more, and 75 wt% or less, 70 wt% or less, or 65 wt% or less, and within this range, the transparency and mechanical properties of the resin composition may be good even further.

According to an embodiment of the present invention, the resin composition may include the maleimide-based monomer unit in 5 wt% to 15 wt%. In a particular embodiment, the resin composition may include the maleimide-based monomer unit in 5 wt% or more, 6 wt% or more, 7 wt% or more, 8 wt% or more, or 9 wt% or more, and 15 wt% or less, 14 wt% or less, 13 wt% or less, 12 wt% or less, 11 wt% or less, or 10 wt% or less, and within this range, the heat resistance and transparency of the resin composition may be good.

According to an embodiment of the present invention, the resin composition may include the aromatic vinyl-based monomer unit in 5 wt% to 15 wt%. In a particular embodiment, the resin composition may include the aromatic vinyl-based monomer unit in 5 wt% or more, 6 wt% or more, 7 wt% or more, 8 wt% or more, or 9 wt% or more, and 15 wt% or less, 14 wt% or less, 13 wt% or less, 12 wt% or less, 11 wt% or less, or 10 wt% or less, and within this range, the transparency of the resin composition may be good, and mechanical properties may be excellent.

According to an embodiment of the present invention, the resin composition may include the vinylcyan-based monomer unit in 0 wt% to 5 wt%. In a particular embodiment, the graft copolymer may include the vinylcyan-based monomer unit in 0.0 wt% or more, 0.1 wt% or more, 0.5 wt% or more, 1 wt% or more, 1.5 wt% or more, or 2.0 wt% or more, and 5.0 wt% or less, 4.5 wt% or less, 4.0 wt% or less, 3.5 wt% or less, 3.0 wt% or less, or 2.5 wt% or less, and within this range, the transparency and color of the resin composition may be good.

According to an embodiment of the present invention, the resin composition may have a notched izod impact strength, measured at room temperature (23°C) after making a notch on a specimen having a thickness of 1/4 inches according to a method of ASTM D256, of 5.0 kgf·cm/cm or more, 5.5 kgf·cm/cm or more, 6.0 kgf·cm/cm or more, 6.5 kgf·cm/cm or more, 7.0 kgf·cm/cm or more, 7.5 kgf·cm/cm or more, 8.0 kgf·cm/cm or more, or 8.5 kgf·cm/cm or more, and 20.0 kgf·cm/cm or less, 18.0 kgf·cm/cm or less, or 15.0 kgf·cm/cm or less.

According to an embodiment of the present invention, the resin composition may have a heat deflection temperature, measured under a stress of 18.6 kgf using a specimen having a thickness of 6.4 mm by a method of ASTM D648, of 90.0°C or higher. In a particular embodiment, the heat deflection temperature of the resin composition may be 90.0°C or higher, 91.0°C or higher, 92.0°C or higher, 93.0°C or higher, 94.0°C or higher, 95.0°C or higher, 95.7°C or higher, 96.0°C or higher, 97.0°C or higher, 98.0°C or higher, 99.0°C or higher, or 100.0°C or higher, and, 110.0°C or lower, 108.0°C or lower, or 105.0°C or lower.

According to an embodiment of the present invention, the resin composition may have a Vicat softening temperature, measured by a method of ASTM D1525, of 100.0°C or higher. In a particular embodiment, the resin composition may have a Vicat softening temperature of 100.0°C or higher, 101.0°C or higher, 102.0°C or higher, 103.0°C or higher, 104.0°C or higher, 105.0°C or higher, 106.0°C or higher, 106.3°C or higher, 107.0°C or higher, 108.0°C or higher, 109.0°C or higher, or 110.0°C or higher, and 120.0°C or lower, 118.0°C or lower, or 115.0°C or lower.

According to an embodiment of the present invention, the resin composition may have a haze change amount obtained by a method of ASTM D1003, by measuring haze with respect to a specimen having a thickness of 3 mm, storing the specimen in a low temperature chamber of -40°C for 12 hours, measuring haze again, and calculating according to Mathematical Formula 4, of 5.0 or less. In a particular embodiment, the resin composition may have a haze change amount of 5.0 or less, 4.5 or less, 4.0 or less, 3.5 or less, 3.0 or less, 2.5 or less, 2.0 or less, 1.9 or less, 1.8 or less, 1.7 or less, 1.6 or less, or 1.5 or less, and 0.0 or 0.1 or more.

ΔHaze = (haze of specimen after storing at low temperature) - (haze of specimen before storing at low temperature)    [Mathematical Formula 4]

Hereinafter, embodiments of the present invention will be explained in detail so that a person skilled in the art can perform easily. However, the present invention can be embodied in various different modes and is not limited to the embodiments explained herein.

## Preparation Examples

### Preparation Example 1: Preparation of Graft Copolymer A

To a polymerization reactor substituted with nitrogen, 50 part by weight of a conjugated diene-based polymer latex (emulsion polymerization, gel content of 70 wt%, average particle diameter of conjugated diene-based polymer particles of 330 nm) on the basis of the solid content, 100 parts by weight of ion exchange water, 1.0 part by weight of sodium oleate as an emulsifier, 37 parts by weight of methyl methacrylate, 2 parts by weight of N-phenylmaleimide, 11 parts by weight of styrene, 0.1 parts by weight of n-octyl mercaptan, 0.03 parts by weight of ethylenediaminetetracetic acid, 0.1 parts by weight of sodium formaldehyde sulfoxylate, 0.0015 parts by weight of ferrous sulfide, and 0.2 parts by weight of t-butyl hydroperoxide were continuously injected for 3 hours at 65°C to carry out a polymerization reaction. Then, the internal temperature of the reactor was elevated to 70°C, aging was carried out for 1 hour and 30 minutes, and the reaction was finished to prepare a graft copolymer latex including a graft copolymer. After that, the graft copolymer latex was coagulated with an aqueous sulfuric acid solution, and the coagulum was washed, dehydrated and dried to obtain graft copolymer A in a powder phase. The graft copolymer A thus obtained had a refractive index of 1.518, a weight average molecular weight of 105,000 g/mol, a PDI of 2.1, a grafting ratio of 67% and the coagulum content of 0.3 wt%.

### Preparation Example 2: Preparation of Graft Copolymer B

To a polymerization reactor substituted with nitrogen, 50 part by weight of a conjugated diene-based polymer latex (emulsion polymerization, gel content of 70 wt%, average particle diameter of conjugated diene-based polymer particles of 330 nm) on the basis of the solid content, 100 parts by weight of ion exchange water, 1.0 part by weight of sodium oleate as an emulsifier, 36 parts by weight of methyl methacrylate, 2 parts by weight of N-phenylmaleimide, 10 parts by weight of styrene, 2 parts by weight of acrylonitrile, 0.1 parts by weight of n-octyl mercaptan, 0.03 parts by weight of ethylenediaminetetracetic acid, 0.1 parts by weight of sodium formaldehyde sulfoxylate, 0.0015 parts by weight of ferrous sulfide, and 0.2 parts by weight of t-butyl hydroperoxide were continuously injected for 3 hours at 65°C to carry out a polymerization reaction. Then, the internal temperature of the reactor was elevated to 70°C, aging was carried out for 1 hour and 30 minutes, and the reaction was finished to prepare a graft copolymer latex including a graft copolymer. After that, the graft copolymer latex was coagulated with an aqueous sulfuric acid solution, and the coagulum was washed, dehydrated and dried to obtain graft copolymer B in a powder phase. The graft copolymer B thus obtained had a refractive index of 1.518, a weight average molecular weight of 114,000 g/mol, a PDI of 2.3, a grafting ratio of 69% and the coagulum content of 0.3 wt%.

**Preparation Example 3: Preparation of Graft Copolymer** C

To a polymerization reactor substituted with nitrogen, 50 part by weight of a conjugated diene-based polymer latex (emulsion polymerization, gel content of 70 wt%, average particle diameter of conjugated diene-based polymer particles of 330 nm) on the basis of the solid content, 100 parts by weight of ion exchange water, 1.0 part by weight of sodium oleate as an emulsifier, 37 parts by weight of methyl methacrylate, 1 part by weight of N-phenylmaleimide, 12 parts by weight of styrene, 0.1 parts by weight of n-octyl mercaptan, 0.03 parts by weight of ethylenediaminetetracetic acid, 0.1 parts by weight of sodium formaldehyde sulfoxylate, 0.0015 parts by weight of ferrous sulfide, and 0.2 parts by weight of t-butyl hydroperoxide were continuously injected for 3 hours at 65°C to carry out a polymerization reaction. Then, the internal temperature of the reactor was elevated to 70°C, aging was carried out for 1 hour and 30 minutes, and the reaction was finished to prepare a graft copolymer latex including a graft copolymer. After that, the graft copolymer latex was coagulated with an aqueous sulfuric acid solution, and the coagulum was washed, dehydrated and dried to obtain graft copolymer C in a powder phase. The graft copolymer C thus obtained had a refractive index of 1.518, a weight average molecular weight of 109,000 g/mol, a PDI of 2.2, a grafting ratio of 55% and the coagulum content of 0.3 wt%.

**Preparation Example 4: Preparation of Graft Copolymer** D

To a polymerization reactor substituted with nitrogen, 50 part by weight of a conjugated diene-based polymer latex (emulsion polymerization, gel content of 70 wt%, average particle diameter of conjugated diene-based polymer particles of 300 nm) on the basis of the solid content, 100 parts by weight of ion exchange water, 1.0 part by weight of sodium oleate as an emulsifier, 34 parts by weight of methyl methacrylate, 0.5 parts by weight of N-phenylmaleimide, 11.5 parts by weight of styrene, 4 parts by weight of acrylonitrile, 0.1 parts by weight of n-octyl mercaptan, 0.03 parts by weight of ethylenediaminetetracetic acid, 0.1 parts by weight of sodium formaldehyde sulfoxylate, 0.0015 parts by weight of ferrous sulfide, and 0.2 parts by weight of t-butyl hydroperoxide were continuously injected for 3 hours at 65°C to carry out a polymerization reaction. Then, the internal temperature of the reactor was elevated to 70°C, aging was carried out for 1 hour and 30 minutes, and the reaction was finished to prepare a graft copolymer latex including a graft copolymer. After that, the graft copolymer latex was coagulated with an aqueous sulfuric acid solution, and the coagulum was washed, dehydrated and dried to obtain graft copolymer D in a powder phase. The graft copolymer D thus obtained had a refractive index of 1.518, a weight average molecular weight of 102,000 g/mol, a PDI of 2.3, a grafting ratio of 50% and the coagulum content of 0.1 wt%.

**Preparation Example 5: Preparation of Graft Copolymer** E

To a polymerization reactor substituted with nitrogen, 50 part by weight of a conjugated diene-based polymer latex (emulsion polymerization, gel content of 70 wt%, average particle diameter of conjugated diene-based polymer particles of 300 nm) on the basis of the solid content, 100 parts by weight of ion exchange water, 1.0 part by weight of sodium oleate as an emulsifier, 34 parts by weight of methyl methacrylate, 12 parts by weight of styrene, 4 parts by weight of acrylonitrile, 0.4 parts by weight of t-dodecyl mercaptan, 0.03 parts by weight of ethylenediaminetetracetic acid, 0.1 parts by weight of sodium formaldehyde sulfoxylate, 0.0015 parts by weight of ferrous sulfide, and 0.2 parts by weight of t-butyl hydroperoxide were continuously injected for 3 hours at 65°C to carry out a polymerization reaction. Then, the internal temperature of the reactor was elevated to 70°C, aging was carried out for 1 hour and 30 minutes, and the reaction was finished to prepare a graft copolymer latex including a graft copolymer. After that, the graft copolymer latex was coagulated with an aqueous sulfuric acid solution, and the coagulum was washed, dehydrated and dried to obtain graft copolymer E in a powder phase. The graft copolymer E thus obtained had a refractive index of 1.518, a weight average molecular weight of 102,000 g/mol, a PDI of 3.3, a grafting ratio of 38% and the coagulum content of 0.2 wt%.

**Preparation Example 6: Preparation of Styrene-based Copolymer A**

To a polymerization reactor provided with a stirrer, 75 parts by weight of methyl methacrylate, 9 parts by weight of styrene, 3 parts by weight of acrylonitrile, 3 parts by weight of N-phenylmaleimide, 64 parts by weight of ion exchange water, 0.02 parts by weight of 1,1-di(t-butylperoxy)cyclohexane, 0.02 parts by weight of dicumyl peroxide, and 1.3 parts by weight of tricalcium phosphate were injected in batch, the stirring speed of the reactor was set to 500 rpm, the temperature of the reactor was elevated to 90°C, and the polymerization was initiated. Then, from a point where a polymerization conversion ratio reached 5% to a point where a polymerization conversion ratio reached 60%, 86 parts by weight of ion exchange water was continuously injected to the reactor at a constant rate. In addition, from a point where a polymerization conversion ratio reached 5% to a point where a polymerization conversion ratio reached 70%, the polymerization was carried out while continuously injecting 10 parts by weight of N-phenylmaleimide to the reactor at a constant rate. In this case, the continuous injection of the ion exchange water was carried out for 100 minutes, and the continuous injection of the N-phenylmaleimide was carried out for 150 minutes. After finishing the continuous injection of the ion exchange water and the N-phenylmaleimide, the polymerization was carried out for 90 minutes while maintaining the temperature of the reactor to 90°C, for 20 minutes while elevating the temperature of the reactor to 120°C, and for 100 minutes while maintaining the temperature of the reactor to 120°C, and then, the polymerization was finished. Formic acid was injected to the polymerization slurry thus obtained to adjust the acid value of the slurry to 2.5, a dispersant was removed, and the resultant was washed, dehydrated and dried to obtain styrene-based copolymer A with a bead type.

**Preparation Example 7: Preparation of Styrene-based Copolymer B**

To a polymerization reactor provided with a stirrer, 79 parts by weight of methyl methacrylate, 4 parts by weight of styrene, 5 parts by weight of N-phenylmaleimide, 64 parts by weight of ion exchange water, 0.02 parts by weight of 1,1-di(t-butylperoxy)cyclohexane, 0.02 parts by weight of dicumyl peroxide, and 1.3 parts by weight of tricalcium phosphate were injected in batch, the stirring speed of the reactor was set to 500 rpm, the temperature of the reactor was elevated to 90°C, and the polymerization was initiated. Then, from a point where a polymerization conversion ratio reached 5% to a point where a polymerization conversion ratio reached 60%, 86 parts by weight of ion exchange water was continuously injected to the reactor at a constant rate. In addition, from a point where a polymerization conversion ratio reached 5% to a point where a polymerization conversion ratio reached 70%, the polymerization was carried out while continuously injecting 12 parts by weight of N-phenylmaleimide to the reactor at a constant rate. In this case, the continuous injection of the ion exchange water was carried out for 100 minutes, and the continuous injection of the N-phenylmaleimide was carried out for 150 minutes. After finishing the continuous injection of the ion exchange water and the N-phenylmaleimide, the polymerization was carried out for 90 minutes while maintaining the temperature of the reactor 90°C, for 20 minutes while elevating the temperature of the reactor to 120°C, and for 100 minutes while maintaining the temperature of the reactor to 120°C, and then, the polymerization was finished. Formic acid was injected to the polymerization slurry thus obtained to adjust the acid value of the slurry to 2.5, a dispersant was removed, and the resultant was washed, dehydrated and dried to obtain styrene-based copolymer B with a bead type.

**Preparation Example 8: Preparation of Styrene-based Copolymer C**

To a polymerization reactor provided with a stirrer, 75 parts by weight of methyl methacrylate, 17.5 parts by weight of styrene, 2 parts by weight of N-phenylmaleimide, 64 parts by weight of ion exchange water, 0.02 parts by weight of 1,1-di(t-butylperoxy)cyclohexane, 0.02 parts by weight of dicumyl peroxide, and 1.3 parts by weight of tricalcium phosphate were injected in batch, the stirring speed of the reactor was set to 500 rpm, the temperature of the reactor was elevated to 90°C, and the polymerization was initiated. Then, from a point where a polymerization conversion ratio reached 5% to a point where a polymerization conversion ratio reached 60%, 86 parts by weight of ion exchange water was continuously injected to the reactor at a constant rate. In addition, from a point where a polymerization conversion ratio reached 5% to a point where a polymerization conversion ratio reached 70%, the polymerization was carried out while continuously injecting 5.5 parts by weight of N-phenylmaleimide to the reactor at a constant rate. In this case, the continuous injection of the ion exchange water was carried out for 100 minutes, and the continuous injection of the N-phenylmaleimide was carried out for 150 minutes. After finishing the continuous injection of the ion exchange water and the N-phenylmaleimide, the polymerization was carried out for 90 minutes while maintaining the temperature of the reactor to 90°C, for 20 minutes while elevating the temperature of the reactor to 120°C, and for 100 minutes while maintaining the temperature of the reactor to 120°C, and then, the polymerization was finished. Formic acid was injected to the polymerization slurry thus obtained to adjust the acid value of the slurry to 2.5, a dispersant was removed, and the resultant was washed, dehydrated and dried to obtain styrene-based copolymer C with a bead type.

**Preparation Example 9: Preparation of Styrene-based Copolymer D**

To a continuous-type polymerization reactor, a material obtained by mixing 64 parts by weight of methyl methacrylate, 26 parts by weight of styrene, 7 parts by weight of acrylonitrile, 3 parts by weight of methacrylic acid, 30 parts by weight of ethylbenzene and 0.15 parts by weight of t-dodecyl mercaptan was continuously injected so that an average retention time was 3 hours. In this case, the temperature of the reactor was maintained to 148°C. A polymerization solution continuously discharged from the reactor was heated in a preliminary heating bath, an unreacted monomer was volatilized in a volatilization bath, and styrene-based copolymer D in a pellet type was obtained using a polymer transfer pump extrusion machine, while maintaining the temperature of the polymerization solution to 210°C.

**Examples and Comparative Examples**

The components were blended in the amounts described in Table 1, and extruded using a biaxial extrusion kneading machine at a cylinder temperature of 250°C to prepare transparent resin compositions in a pellet type.

In this case, the amounts of the components are on the basis of the total 100 parts by weight of a graft copolymer and a styrene-based copolymer.

[Table 1]

| Division | Graft copolymer | | Styrene-based copolymer | |
|---|---|---|---|---|
| | Type | Amount (parts by weight) | Type | Amount (parts by weight) |
| Example 1 | Graft copolymer A | 30 | Styrene-based copolymer A | 70 |
| Example 2 | Graft copolymer B | 30 | Styrene-based copolymer A | 70 |
| Example 3 | Graft copolymer C | 30 | Styrene-based copolymer A | 70 |
| Example 4 | Graft copolymer D | 30 | Styrene-based copolymer A | 70 |
| Example 5 | Graft copolymer A | 30 | Styrene-based copolymer B | 70 |
| Example 6 | Graft copolymer A | 30 | Styrene-based copolymer C | 70 |
| Comparative Example 1 | Graft copolymer A | 30 | Styrene-based copolymer D | 70 |
| Comparative Example 2 | Graft copolymer B | 30 | Styrene-based copolymer D | 70 |
| Comparative Example 3 | Graft copolymer C | 30 | Styrene-based copolymer D | 70 |
| Comparative Example 4 | Graft copolymer E | 20 | Styrene-based copolymer D | 80 |

**Experimental Examples**

**Experimental Example 1**

With respect to the graft copolymers A to E, prepared in Preparation Examples 1 to 5, a refractive index, a weight average molecular weight, molecular weight distribution, a grafting ratio and the coagulum content were measured by the methods below, and are shown in Table 2.

* Refractive index: Calculation was performed according to Mathematical Formula 1 from the amounts of the components injected during preparing the graft copolymer of each of the Preparation Examples.

$$[Mathematical \ Formula \ 1]$$

$$Refractive \ index \ (RI) = \sum Wti*RIi$$

- Wti = weight fraction of each component in graft copolymer (%)
- RIi = refractive index of homopolymer of each component of graft copolymer

* Weight average molecular weight and molecular weight distribution: Each of the graft copolymer fragments prepared in the Preparation Examples was injected into acetone and stirred for 24 hours, and a rubber component not dissolved in acetone (insoluble component) and a copolymer component dissolved in acetone (soluble component) were separated using a centrifuge. With respect to the separated soluble component in acetone, a weight average molecular weight, a number average molecular weight and molecular weight distribution were measured using gel permeation chromatography (GPC). In this case, two PLgel Olexis columns and one PLgel mixed-C column of Polymer Laboratories Co. were used in combination. In addition, newly replaced columns were all mixed bed type columns, and polystyrene was used as a GPC standard material.

- Solvent: Tetrahydrofuran (stabilized with BHT)
- Flow rate: 1.0 ml/min
- Specimen concentration: 2.0 mg/ml
- Injection amount: 100 μl
- Column temperature: 30°C
- Detector: Waters 2414 refractive index detector
- Data processing: Empower 3

* Grafting ratio (%): A certain amount of a dried copolymer fragment of each of the graft copolymer latexes prepared in the Preparation Examples was injected into acetone, vibrated for 24 hours in a vibrator (product name: SI-600R, manufacturer: Lab. companion) to dissolve a free graft copolymer, centrifuged for 1 hour at 14,000 rpm using a centrifuge, and dried in a vacuum drier (product name: DRV320DB, manufacturer: ADVANTEC) at 140°C for 2 hours to obtain an insoluble component, and calculation was performed according to Mathematical Formula 2.

$$[Mathematical\ Formula\ 2]$$

$$Grafting\ ratio\ (\%) = [(Y-(X*R))/(X*R)]*100$$

Y: weight of insoluble component
X: weight of graft copolymer injected when obtaining insoluble component
R: fraction of conjugated diene-based polymer in graft copolymer injected when obtaining insoluble component

* Coagulum content (wt%): Each of the graft copolymer latexes prepared in the Preparation Examples was sieved through a 100 mesh sieve, materials not passed through the sieve were dried in a hot air drier of 80°C for 6 hours, and the weight of a solid coagulum was measured, and then, calculation was performed according to Mathematical Formula 3.

Coagulum content (%) = [weight of dried coagulum after separation by mesh sieve (g)/total weight of rubber and monomer used for polymerization (g)] × 100          [Mathematical Formula 3]

[Table 2]

| Division | Refrac tive index | Weight average molecular weight | Molecula r weight distribu tion | Grafting ratio (%) | Coagulum content (wt%) |
|---|---|---|---|---|---|
| Preparation Example 1 | 1.518 | 105,000 | 2.1 | 67 | 0.3 |
| Preparation Example 2 | 1.518 | 114,000 | 2.3 | 69 | 0.3 |
| Preparation Example 3 | 1.518 | 109,000 | 2.2 | 55 | 0.3 |
| Preparation Example 4 | 1.518 | 102.000 | 2.3 | 50 | 0.1 |
| Preparation Example 5 | 1.518 | 102,000 | 3.3 | 38 | 0.2 |

**Experimental Example 2**

By using specimens manufactured by injecting pellets formed in Examples 1 to 6 and Comparative Examples 1 to 4 at an injection temperature of 210°C using an injector, impact strength, heat deflection temperature, Vicat softening temperature and whitening at a low temperature were measured by the methods below, and the results are shown in Table 3.

* Impact strength (kgf·cm/cm): According to a method of ASTM D256, a specimen having a thickness of 1/4 inches was notched, and notched izod impact strength was measured using an impact strength measurement machine (TINIUS OLSEN Co.) at room temperature (23°C).

* Heat deflection temperature (HDT, °C): According to a method of ASTM D648, measurement was performed under a stress of 18.6 kgf using a specimen having a thickness of 6.4 mm.
* Vicat softening temperature (°C): According to a method of ASTM D1525, measurement was performed under conditions of a load of 50 N, maximum penetration of 1.0 mm, and 50°C/hr, using a specimen having a width of 10 mm and a thickness of 3.2 mm.
* Whitening at low temperature (ΔHaze): According to a method of ASTM D1003, haze was measured for a specimen having a thickness of 3 mm using a haze meter, HZ-V3 machine. Then, the specimen was stored in a low temperature chamber of -40°C for 12 hours, the haze was measured again, and a haze change amount was calculated according to Mathematical Formula 4.

ΔHaze = (haze of specimen after storing at low temperature) - (haze of specimen before storing at low temperature)　　　[Mathematical Formula 4]

[Table 3]

| Division | Impact strength (kgf·cm/c m) | Heat deflection temperature (°C) | Vicat softening temperature (°C) | Whitening at low temperatur e (ΔHaze) |
|---|---|---|---|---|
| Example 1 | 10.2 | 101.8 | 111.9 | 1.2 |
| Example 2 | 10.5 | 101.5 | 111.7 | 1.4 |
| Example 3 | 9.8 | 101.2 | 109.5 | 0.8 |
| Example 4 | 9.6 | 100.2 | 111.9 | 1.0 |
| Example 5 | 8.5 | 102.6 | 114.2 | 1.9 |
| Example 6 | 10.0 | 95.7 | 106.3 | 0.6 |
| Comparative Example 1 | 14.2 | 85.0 | 94.2 | 0.7 |
| Comparative Example 2 | 15.1 | 85.1 | 93.9 | 0.7 |
| Comparative Example 3 | 14.5 | 84.7 | 95.3 | 0.2 |
| Comparative Example 4 | 10.8 | 83.6 | 94.0 | 8.2 |

As shown in Table 3, the resin compositions of Examples 1 to 6 according to the present invention have molecular weight distribution of 2.5 or less and high grafting ratios and include a graft copolymer including a maleimide-based monomer unit, and it can be confirmed that the compatibility between the graft copolymer and the styrene-based copolymer which is a matrix resin is excellent, impact strength is excellent, and heat resistance and whitening at a low temperature are excellent.

On the contrary, though the resin compositions of Comparative Examples 1 to 3 include the same graft copolymers as those of Examples 1 to 3, it can be confirmed that the styrene-based copolymer which is a matrix resin does not include a maleimide-based monomer unit, and heat resistance is significantly inferior.

In addition, in the resin composition of Comparative Example 4, both the graft copolymer and the styrene-based copolymer do not include a maleimide-based monomer unit, and it can be confirmed that heat resistance and whitening at a low temperature are inferior.

**Claims**

1. A resin composition comprising:

   a graft copolymer and a styrene-based copolymer,
   wherein the graft copolymer comprises a conjugated diene-based polymer, an alkyl (meth)acrylate-based monomer unit and an aromatic vinyl-based monomer unit, and
   the styrene-based copolymer comprises an alkyl (meth)acrylate-based monomer unit, an aromatic vinyl-based monomer unit and a maleimide-based monomer unit.

2. The resin composition of claim 1, wherein the graft copolymer has a refractive index of 1.515 to 1.520.

3. The resin composition of claim 1, wherein the graft copolymer has a weight average molecular weight of 90,000 g/mol to 130,000 g/mol.

4. The resin composition of claim 1, wherein the graft copolymer has a molecular weight distribution of 2.7 or less.

5. The resin composition of claim 1, wherein the graft copolymer has a grafting ratio of 44% or more.

6. The resin composition of claim 1, wherein the graft copolymer comprises:

   20 wt% to 70 wt% of the conjugated diene-based polymer;
   25 wt% to 55 wt% of the alkyl (meth)acrylate-based monomer unit;
   1 wt% to 15 wt% of the aromatic vinyl-based monomer unit; and
   0 wt% to 5 wt% of a vinylcyan-based monomer unit.

7. The resin composition of claim 1, wherein the graft copolymer comprises a maleimide-based monomer unit.

8. The resin composition of claim 7, wherein the graft copolymer comprises:

   20 wt% to 70 wt% of the conjugated diene-based polymer;
   25 wt% to 55 wt% of the alkyl (meth)acrylate-based monomer unit;
   0.1 wt% to 3 wt% of the maleimide-based monomer unit;
   1 wt% to 15 wt% of the aromatic vinyl-based monomer unit; and
   0 wt% to 5 wt% of a vinylcyan-based monomer unit.

9. The resin composition of claim 1, wherein the styrene-based copolymer comprises:

   50 wt% to 90 wt% of the alkyl (meth)acrylate-based monomer unit;
   1 wt% to 20 wt% of the aromatic vinyl-based monomer unit;
   1 wt% to 20 wt% of the maleimide-based monomer unit; and
   0 wt% to 5 wt% of a vinylcyan-based monomer unit.

10. The resin composition of claim 1, wherein the resin composition comprises, on a basis of a total amount of the graft copolymer and the styrene-based copolymer:

    10 wt% to 40 wt% of the conjugated diene-based polymer;
    40 wt% to 75 wt% of the alkyl (meth)acrylate-based monomer unit;
    5 wt% to 15 wt% of the maleimide-based monomer unit;
    5 wt% to 15 wt% of the aromatic vinyl-based monomer unit; and
    0 wt% to 5 wt% of a vinylcyan-based monomer unit.

11. The resin composition of claim 1, wherein the resin composition has a heat deflection temperature of 90.0°C or higher, measured under a stress of 18.6 kgf using a specimen having a thickness of 6.4 mm by a method of ASTM D648.

12. The resin composition of claim 1, wherein the resin composition has a haze change amount of 2.0 or less, obtained by a method of ASTM D1003 by measuring haze with respect to a specimen having a thickness of 3 mm, storing the specimen in a low temperature chamber of -40°C for 12 hours, measuring haze again, and calculating according to the following Mathematical Formula 4:

ΔHaze = (haze of specimen after storing at low temperature) - (haze of specimen before storing at low temperature)     [Mathematical Formula 4]

## INTERNATIONAL SEARCH REPORT

| International application No. |
|---|
| **PCT/KR2023/016081** |

**A. CLASSIFICATION OF SUBJECT MATTER**

**C08L 51/04**(2006.01)i; **C08L 35/06**(2006.01)i; **C08L 35/04**(2006.01)i; **C08L 25/08**(2006.01)i

According to International Patent Classification (IPC) or to both national classification and IPC

**B. FIELDS SEARCHED**

Minimum documentation searched (classification system followed by classification symbols)

C08L 51/04(2006.01); B41M 5/26(2006.01); C08J 5/18(2006.01); C08L 23/00(2006.01); C08L 25/14(2006.01); C08L 33/06(2006.01); C08L 35/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 수지 조성물(resin composition), 그라프트 공중합체(graft copolymer), 스티렌계 공중합체(styrene-based copolymer), 말레이미드계 단량체 단위(maleimide-based monomer unit), 투명성(transparency), 내열성(thermal resistance), 가공성(processability)

**C. DOCUMENTS CONSIDERED TO BE RELEVANT**

| Category* | Citation of document, with indication, where appropriate, of the relevant passages | Relevant to claim No. |
|---|---|---|
| X | JP 2013-104042 A (DENKI KAGAKU KOGYO CO., LTD.) 30 May 2013 (2013-05-30)<br>See paragraphs [0009], [0037]-[0041] and [0058]-[0073]. | 1,6-12 |
| Y | | 2,5 |
| A | | 3,4 |
| Y | WO 03-080724 A1 (TECHNO POLYMER CO., LTD.) 02 October 2003 (2003-10-02)<br>See page 5, line 1 - page 11, line 11. | 2,5 |
| X | JP 2011-184608 A (DAICEL PACK SYSTEMS LTD.) 22 September 2011 (2011-09-22)<br>See paragraphs [0021]-[0040]. | 1,3,4,11,12 |
| A | JP 2001-139758 A (TECHNO POLYMER CO., LTD.) 22 May 2001 (2001-05-22)<br>See entire document. | 1-12 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 January 2024** | **19 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/016081**

**C.    DOCUMENTS CONSIDERED TO BE RELEVANT**

| Category* | Citation of document, with indication, where appropriate, of the relevant passages | Relevant to claim No. |
|---|---|---|
| A | JP 2006-143758 A (TOSOH CORP.) 08 June 2006 (2006-06-08)<br>See entire document. | 1-12 |

Form PCT/ISA/210 (second sheet) (July 2022)

## INTERNATIONAL SEARCH REPORT
### Information on patent family members

| International application No. |
| --- |
| **PCT/KR2023/016081** |

| Patent document cited in search report | | | Publication date (day/month/year) | Patent family member(s) | | | Publication date (day/month/year) |
| --- | --- | --- | --- | --- | --- | --- | --- |
| JP | 2013-104042 | A | 30 May 2013 | JP | 5885473 | B2 | 15 March 2016 |
| WO | 03-080724 | A1 | 02 October 2003 | AU | 2003-221079 | A1 | 08 October 2003 |
| | | | | JP | 4153877 | B2 | 24 September 2008 |
| | | | | WO | 2003-080724 | A1 | 21 July 2005 |
| JP | 2011-184608 | A | 22 September 2011 | JP | 5390437 | B2 | 15 January 2014 |
| JP | 2001-139758 | A | 22 May 2001 | JP | 4367676 | B2 | 18 November 2009 |
| JP | 2006-143758 | A | 08 June 2006 | | None | | |

Form PCT/ISA/210 (patent family annex) (July 2022)

**EP 4 606 856 A1**

**Patent documents cited in the description**

- KR 1020220136322
- US 3787522 A
- JP 63042940 A
- EP 0703252 A
- JP 63042940 B
- EP 0703252 B2